# EUROPEAN PATENT APPLICATION

(11) **EP 3 885 722 A1**
(43) Date of publication of application: **29.09.2021**
(21) Application number: 20192046.9
(22) Date of filing: 21.08.2020
(51) Int. Cl.: G01H 3/12, G06N 3/08, G06N 3/04, G01N 29/44

(54) **DETECTION DEVICE FOR DETECTING A NOISE AND A VIBRATION IN A MOTOR VEHICLE, AS WELL AS A METHOD**

(71) Applicant: Daimler AG, 70372 Stuttgart (DE)
(72) Inventor: Ganzabal Larrea, Gonzalo, 01015 Vitoria (ES); Saratxaga, Ibon, 01400 Laudio (ES); Diez, Itxasne, 48370 Bermeo (ES); Hernaez Rioja, Inmaculada, 48014 Bilbao (ES); Navas, Eva, 20005 Donostia (ES)
(74) Representative: Riege, Britta

(57) **Abstract**

The invention relates to a detection device (10) for detecting a noise and a vibration in a motor vehicle (12), with at least one microphone (14) for capturing a sound (16) inside of the motor vehicle (12) and with an electronic computing device(18) of the detection device (10) for analyzing the captured sound (16) in the inside of the motor vehicle (12), wherein the electronic computing device (18) is configured for detecting buzz, squeak, and rattle sounds (16) as the noise and the vibration inside of the motor vehicle (12), wherein the electronic computing device (18) comprises a trained neural network (20), wherein the trained neural network (20) is analyzing the captured sound (16). Furthermore the invention relates to a method.

## Description

The invention relates to a detection device for detecting a noise and a vibration in a motor vehicle according to the independent claim 1. Furthermore, the invention relates to a method for detecting a noise and a vibration in a motor vehicle.

From the state of the art it is known, that different research projects around the sound quality inside the vehicles were developed and tools for the automatic evaluation of this feature were modelled. These projects allow to obtain detailed knowledge about the problems and requirements of the areas related with the sound quality of the vehicles and may generate resources, methodologies and tools to address them.

US 2014 100 714 A1 discloses a method for detecting buzz, squeak, or rattle of interior components in a vehicle. A sine sweep signal is output through speakers of an audio system mounted in the vehicle capable of causing buzz, squeak, and rattle by defective installed parts in the vehicle. Audible sounds within the vehicle are recorded by a portable test unit during the outputting of the sine sweep signal. A component of the recorded audible sounds corresponding to the direct recording of the sweep signal is removed. Recorded audible sounds are recorded without the component to determine if a predetermined threshold is exceeded. A vehicle repair indication is generated in response to a determination that the sound exceeds the predetermined threshold.

It is an object of the present invention to provide a detection device as well as a method, by which noise and vibration inside the motor vehicle may be detected in an efficient way. This object is solved by a detection device as well as a corresponding method according to the independent claims. Advantageous embodiments are presented in the dependent claims.

One aspect of the invention relates to a detecting device for detecting a noise and a vibration in a motor vehicle, with at least one microphone for capturing a sound inside of the motor vehicle and with an electronic computing device of the detection device for analysing the captured sound in the inside of the motor vehicle, wherein the electronic computing device is configured for detecting buzz, squeak, and rattle sounds as the noise and the vibration inside of the motor vehicle.

According to an embodiment the electronic computing device comprises a trained neural network, wherein the trained neural network is analysing the captured sound.

Therefore, an automatic detection and classification of buzz, squeak, and rattle sounds in the motor vehicle may be realized. The detection device allows a classification of the audit evaluation of the motor vehicle quality with an objective quantification, reducing human variability of the evaluation. Therefore, the quality noise evaluation of the motor vehicle may be automated and human subjectivity may be reduced.

In an embodiment the neural network is a deep learning convolutional neural network comprising fully connected layers.

In another embodiment the neural network is trained by manually labelling sounds inside of the motor vehicle.

In another embodiment the electronic computing device is a server based electronic computing device.

According to another embodiment the neural network is trained to perform an event-based detection of the sound.

Another aspect of the invention relates to a method for detecting a noise and a vibration in a motor vehicle by a detection device, wherein a sound inside of the motor vehicle is detected by at least one microphone and the captured sound inside of the motor vehicle is analysed by an electronic computing device of the detection device, wherein buzz, squeak, and rattle sounds as the noise and the vibration inside of the motor vehicle are detected by the electronic computing device.

According to the embodiment a trained neural network of the electronic computing device is analysing the captured sound.

Advantageous forms of the detection device are to be regarded as advantageous forms of the method. The detection device therefore comprises means for performing the method.

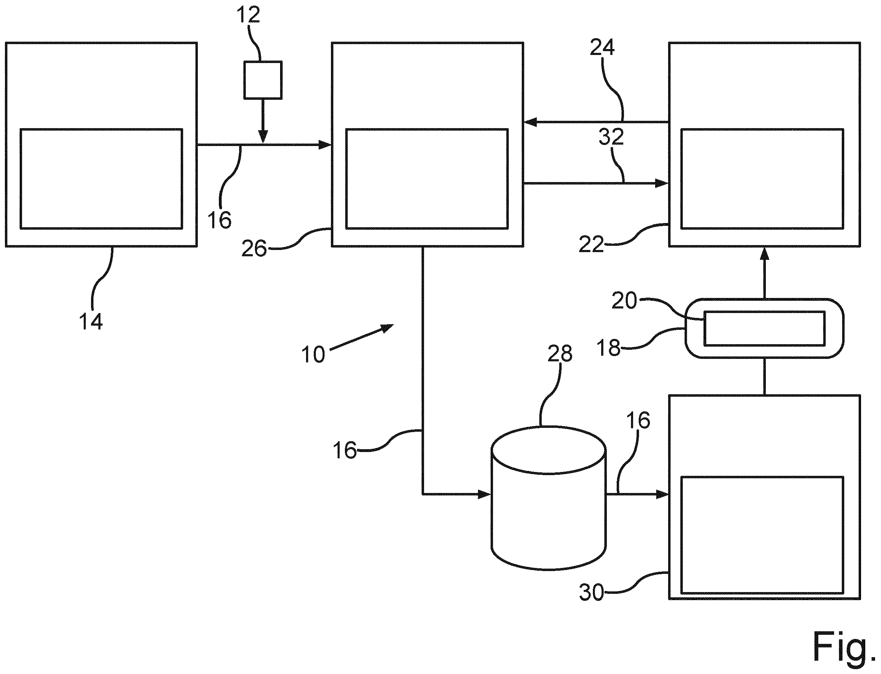

Further advantages, features, and details of the invention derive from the following description of a preferred embodiment as well as from the drawing. The features and feature combinations previously mentioned in the description as well as the features and feature combinations mentioned in the following description of the figure and/or shown in the figure alone can be employed not only in the respectively indicated combination but also in any other combination or taken alone without leaving the scope of the invention.

The drawing shows in the only Fig. a schematic block diagram of an embodiment of the detection device.

In the figure the same elements or elements having the same function are indicated by the same reference signs.

The Fig. shows a schematic block diagram according to an embodiment of a detection device 10. The detection device 10 is for detecting a noise and a vibration in a motor vehicle 12, with at least one microphone 14 for capturing a sound 16 inside of the motor vehicle 12 and with an electronic computing device 18 of the detection device 10 for analysing the captured sound 16 inside of the motor vehicle 10, wherein the electronic computing device 18 is configured for detecting buzz, squeak, and rattle sounds 16 as a noise and the vibration inside of the motor vehicle 12.

In one embodiment the electronic computing device 18 comprises a trained neural network 20, wherein the trained neural network 20 is analysing the captured sound 16.

The neural network 20 is a deep learning convolutional neural network 20 comprising fully connected layers. Furthermore the neural network 20 may be trained by manually labelling sounds 16 inside of the motor vehicle 12. Furthermore the electronic computing device 18 is a server based electronic computing device 18, which is connected with a production server 22.

Furthermore the neural network 20 may be trained to perform an event-based detection of the sound 16. The detection of the sound 16 is shown with an arrow 24.

According to the shown embodiment the microphone 14 may be also regarded as an acquisition equipment and may be for example SQuadriga II, microphones or Tarjeta SD.

Furthermore the detection device 10 comprises an evaluation equipment 26, which may be for example a laptop, D&C client or a visualization device. The sounds 16 are transmitted from the evaluation equipment 26 to a storing device 28, wherein the storing device 28 may transmit the sounds 16 to a development platform 30, which may comprise GPUs, CUDA, Tensorflow or Python. The development platform 30 is connected to the electronic computing device 18, in particular to the neural network 20, wherein the neural network 20 is connected to the production server 22, which may be a server, TFServing or Python. From the evaluation equipment 26 parameters 32 are transmitted to the production server 22.

According to the invention in a first step the sound quality criteria is defined to be analysed and the environment, where the criteria were to be measured. Sound quality is a complex concept that may be determined by different factors: perceived global noise levels, user experience, abnormal noise presence or furthermore. In the quality assessments, this last factor is analysed. In the literature, this kind of noises are known as buzz, squeak, and rattle (BSR) noises.

Besides the type of noise, the conditions for the evaluation of the appearance of these noises were also defined: quality assessment sessions in real driving conditions in a rural road and simulation of this road by means of a shaker in the functional analysis department. In both scenarios the global sound in the vehicle interior has been analysed, for example the sound produced by the whole vehicle 12 as it is perceived in the usual positions of driver and passengers.

With these conditions the automatic detection and classification device is developed based on the BSR sound event, which is able to operate in the real driving conditions of the quality assessment sessions, so it can be used as an objective support tool by the auditors.

Therefore a machine learning technique is used, based in deep neural networks, due to their efficient performance for audio signal analysis in adverse conditions and environments.

The development of a machine learning system requires a great amount of data, "examples" that are provided to the detection device 10 first to learn from them, in particular in the training stage, and then to evaluate the performance of the detection device 10. This material includes the audio recorded in the motor vehicle 12 under the planned use conditions of the detection device 10, and also the corresponding classifications, in particular severity of the noise, the human auditors have assigned to each of the perceived noise events. This is called the labelling of the recordings. As the BSR sound events occur usually for short periods, it is necessary to mark the segments of the audio where they appear, a procedure called segmentation.

Therefore the storing device 28, which may be also called a database, is designed specifying the characteristics of the sounds 16 sessions and the audio equipment to be used. The material is manually labelled and segmented, indicating the presence of abnormal sound events and their severity, according to the auditors.

The manual segmentation and even the scoring of the auditors are error prone, subjective and sometimes non-consistent procedures. That is why the quality of the segmentation is analysed by means of surveys carried out by the auditors. In those evaluations the original classification of the auditor is re-evaluated by his or her peers and also the inter-auditor agreement level is studied.

The detection device 10 is for detection and classification of sound events and is designed and build using the neural network 22 as the core technology. The detection device 10 is based on the deep neural network (DNN), and is loosely inspired in experiences in the area of the automatic sound environment recognition. Therefore different architectures using convolutional neural networks 22 with fully connected layers are able to detect the sound 16. Dropout and regularization techniques are also employed seeking to improve the robustness of the network 22. Mono, bi and n-aural versions of the neural network 22 are used, using two- and one-dimensional convolutional layers.

The neural network 22 is build using a Tensorflow and Python, and it is trained in an intensive computation server with a CUDA platform running over NVIDIA GPUs.

The different configurations of the detection device 10 has been evaluated mainly for event detection tasks, which means that the recorded signal has to be fragmented in short frames, between 0.5 and 1 seconds, and classified binary as event or no-event. The task is complicated because the acoustic environment of the quality assessment sessions is very exigent, with engine, rolling and aerodynamic noises masking the comparatively weak abnormal sound events. Furthermore, inconsistencies among the human auditors themselves have been detected in the classification of the faintest of the events, and this impacts negatively both in the training and in the evaluation of the detection device 10.

The creation of the neural network 20 requires a laborious process of adjustment and validation of multiple system parameters 32 ranging from its architecture to the details of its training.

Furthermore information about the evaluation of a motor vehicle on a shaker may also be performed. The shaker was included in the recordings 16 for the database. The same cars that were recorded in the circuit were mounted on the shaker and the sound in the motor vehicle 12 interior was recorded using a simulation of the real road circuit and a sinusoidal excitation signal with upwards and downwards moving frequency, which is called "frequency swept". These sounds 16 have also been segmented and labelled in the database. Some classifiers have been trained using this material, with similar results to the detection device 10 trained with the real road circuit recordings.

## Claims

1. A detection device (10) for detecting a noise and a vibration in a motor vehicle (12), with at least one microphone (14) for capturing a sound (16) inside of the motor vehicle (12) and with an electronic computing device(18) of the detection device (10) for analyzing the captured sound (16) in the inside of the motor vehicle (12), wherein the electronic computing device (18) is configured for detecting buzz, squeak, and rattle sounds (16) as the noise and the vibration inside of the motor vehicle (12),
**characterized in that**
the electronic computing device (18) comprises a trained neural network (20), wherein the trained neural network (20) is analyzing the captured sound (16).

2. The detection device (10) according to claim 1,
**characterized in that**
the neural network (20) is a deep learning convolutional neural network (20) comprising fully connected layers.

3. The detection device (10) according to claim 1 or 2,
**characterized in that**
the neural network (20) is trained by manually labelling sounds (16) inside of the motor vehicle (12).

4. The detection device (10) according to claim 1 or 3,
**characterized in that**
the electronic computing device (18) is a server based electronic computing device (18).

5. The detection device (10) according to claim 1 or 4,
**characterized in that**
the neural network (20) is trained to perform an event-based detection of the sound (16).

6. A method for detecting a noise and a vibration in a motor vehicle (12) by a detection device (10), wherein a sound (16) inside of the motor vehicle (12) is detected by at least one microphone (14) and the captured sound (16) inside of the motor vehicle (12) is analyzed by an electronic computing device (18) of the detection device (10), wherein buzz, squeak, and rattle sounds (16) as the noise and the vibration inside of the motor vehicle (12) are detected by the electronic computing device (18),
**characterized in that**
a trained neural network (20) of the electronic computing device (18) is analyzing the captured sound (16).
